# EUROPEAN PATENT APPLICATION

(11) **EP 1 557 936 A1**
(43) Date of publication of application: **27.07.2005**
(21) Application number: 05001102.2
(22) Date of filing: 20.01.2005
(51) Int. Cl.: H02N 1/00

(54) **Actuator for an optical device**

(30) Priority: 21.01.2004 JP 2004012929
(71) Applicant: SUMITOMO ELECTRIC INDUSTRIES, Ltd, Osaka-shi, Osaka 541-0041 (JP)
(72) Inventor: Kanie, Tomohiko, Yokohama-shi Kanagawa 244-8588 (JP)
(74) Representative: HOFFMANN - EITLE

(57) **Abstract**

An actuator structure 5 is arranged to generate an electrostatic force between electrodes 7, 8 to move the electrode 7 relative to the electrode 8. The electrode 7 has a stationary portion 10 fixed to an upper surface of a substrate, a connection portion 11 supported on this stationary portion 10, and a comb portion 12 supported on the connection portion 11. The electrode 8 has a stationary portion 15 fixed to the upper surface of the substrate, and a comb portion 17 coupled trough a connection portion 16 to the stationary portion 15. The comb portion 17 is opposed to the comb portion 12.

## Description

### BACKGROUND OF THE INVENTION

### Field of the Invention

The present invention relates to an actuator structure installed in an optical device such as an optical switch or an optical variable attenuator, and to the optical device.

### Related Background of the Invention

One of the known actuator structures used in optical switches and optical variable attenuators is an electrostatic actuator formed by use of the Micro-Electro-Mechanical System (MEMS) technology, for example, as described in Sensors and Materials, Vol. 10, No. 6 (1998) 351-362, "Silicon Micromechanics for the Fiber-Optic Information Highway."

### SUMMARY OF THE INVENTION

However, where each of a movable electrode and a stationary electrode forming the electrostatic actuator is a comb electrode, the movable electrode can be displaced with temperature change even if a voltage applied between the movable electrode and the stationary electrode is kept constant. This can result in variations in optical characteristics of the optical device.

An object of the present invention is to provide an actuator structure and an optical device capable of compensating for the displacement of the electrode with temperature change.

An actuator structure according to the present invention comprises a first electrode having a first stationary portion fixed to a substrate, a first connection portion supported on the first stationary portion, and a first comb-teeth portion connected through the first connection portion to the first stationary portion; a second electrode having a second stationary portion fixed to the substrate, a second connection portion supported on the second stationary portion, and a second comb-teeth portion connected through the second connection portion to the second stationary portion and opposed to the first comb-teeth portion; and means for generating an electrostatic force between the first electrode and the second electrode.

Namely, the actuator structure of the present invention comprises the first electrode, the second electrode, and the means for generating the electrostatic force. The first electrode has the first stationary portion, the first connection portion, and a first comb portion. The first stationary portion is fixed to the substrate. The first connection portion is supported on the first stationary portion. The first comb portion is connected through the first connection portion to the first stationary portion. The second electrode has the second stationary portion, the second connection portion, and a second comb portion. The second stationary portion is fixed to the substrate. The second connection portion is supported on the second stationary portion. The second comb portion is connected through the second connection portion to the second stationary portion and is opposed to the first comb portion. The means for generating the electrostatic force is arranged to generate the electrostatic force between the first electrode and the second electrode. The first comb portion, the second comb portion, the first connection portion, and the second connection portion are spaced from the substrate.

Each of the first comb portion and the second comb portion comprises an arm extending in a predetermined direction, and a plurality of electrode fingers connected to a side face of the arm and extending in a direction intersecting with the predetermined direction. The arm of the first comb portion is opposed to the arm of the second comb portion, and the electrode fingers of the first comb portion are also opposed to the electrode fingers of the second comb portion. Namely, the structure composed of the first comb portion and the second comb portion is the interdigital structure.

In this actuator structure, where the second electrode is movable relative to the first electrode, thermal expansion of the second electrode with temperature change will lead to displacement of the second comb-teeth portion of the second electrode due to thermal expansion. Since the first stationary portion of the first electrode is fixed to the substrate on the other hand, an amount of thermal expansion of the first stationary portion with temperature change is smaller than that of the second electrode. However, since the first comb-teeth portion of the first electrode is not fixed to the substrate but is connected through the first connection portion to the first stationary portion, if the first connection portion is constructed so as to displace the first comb-teeth portion in the same direction as the direction of the thermal expansion of the second electrode, the first comb-teeth portion of the first electrode is also displaced with thermal expansion in the same manner as the second comb-teeth portion of the second electrode is. In this case, the gap between the comb teeth of the first comb-teeth portion and the comb teeth of the second comb-teeth portion is kept almost constant even with the thermal expansion of the second electrode, and thus the electric field is also kept almost constant between the first electrode and the second electrode. This successfully achieves the compensation for the displacement of the second electrode with temperature change.

Namely, since in the actuator structure of the present invention the first comb portion and the second comb portion are spaced from the substrate, even if the arm of the second comb portion and the arm of the first comb portion each are thermally expanded in the longitudinal direction (i.e., the predetermined direction), the electrode fingers (i.e., comb teeth) of the second comb portion and the electrode fingers (i.e., comb teeth) of the first comb portion are displaced in the same manner. Therefore, the gap is kept constant between the electrode fingers of the first comb portion and the electrode fingers of the second comb portion, and thus the electric field is also kept almost constant between the first electrode and the second electrode. This successfully achieves the compensation for the displacement of the second electrode with temperature change.

Preferably, the first connection portion is made of an elastically deformable material. In this case, the first comb-teeth portion and the second comb-teeth portion can be displaced in the same manner so as to go along better with temperature change. Namely, in accordance with temperature change, the electrode fingers of the first comb portion can be displaced in the predetermined direction in the same manner as the electrode fingers of the second comb portion are.

In this actuator structure, the first connection portion preferably has a spring structure. In this case, the first comb-teeth portion can be displaced in the same manner as the second comb-teeth portion, so as to further go along with temperature change. Namely, in accordance with temperature change, the electrode fingers of the first comb portion can be displaced in the predetermined direction in the same manner as the electrode fingers of the second comb portion are.

The first connection portion preferably has a beam structure for supporting the first comb portion so as to be deformable in the longitudinal direction of the first comb portion. Namely, the first connection portion preferably has the beam structure for supporting the arm of the first comb portion so as to be elastically deformable in the longitudinal direction thereof (i.e., the predetermined direction). In this case, in accordance with temperature change, the electrode fingers of the first comb portion can also be displaced in the predetermined direction in the same manner as the electrode fingers of the second comb portion are.

Preferably, the second comb portion is cantilevered through the second connection portion on the second stationary portion. In this case, the second electrode is of a structure in which the second comb portion moves around a support point of the second connection portion.

The second comb portion may be constructed so as to be supported on both sides thereof through the second connection portion on the second stationary portion. Namely, the longitudinal ends of the arm of the second comb portion may be supported through the second connection portion on the second stationary portion. In this case, the second comb portion can be structured so as to be movable in a direction substantially perpendicular to a straight line connecting support points through the second connection portion.

Furthermore, preferably, an amount of displacement of the second comb-teeth portion under application of the electrostatic force between the first electrode and the second electrode from a state without application of the electrostatic force is arranged to be greater than that of the first comb-teeth portion. This makes it feasible to largely change the position of the second comb-teeth portion. Namely, the amount of displacement of the second comb portion is arranged to be greater than that of the first comb portion, whereby the second comb portion can be largely displaced toward the first comb portion.

An optical device according to the present invention comprises the above-described actuator structure, and an optical component connected to the second electrode of the actuator structure. The provision of the above-described actuator structure enables the compensation for the displacement of the second electrode with temperature change. This makes it feasible to reduce temperature dependence of optical characteristics.

### BRIEF DESCRIPTION OF THE DRAWINGS

Fig. 1 is a configuration diagram showing an optical switch provided with a first embodiment of the actuator structure according to the present invention.
Fig. 2 is an enlarged view of the actuator structure shown in Fig. 1.
Fig. 3 is a vertical sectional view of the actuator structure shown in Fig. 1.
Fig. 4 is an illustration showing an operation state of the actuator structure shown in Fig. 1.
Fig. 5 is a configuration diagram showing another actuator structure, as a comparative example.
Fig. 6 is a configuration diagram showing a second embodiment of the actuator structure according to the present invention.
Fig. 7 is a configuration diagram showing a third embodiment of the actuator structure according to the present invention.
Fig. 8 is a configuration diagram showing a fourth embodiment of the actuator structure according to the present invention.
Fig. 9 is a configuration diagram showing an optical variable attenuator provided with the actuator structure shown in Fig. 2.
Fig. 10 is a configuration diagram showing a dispersion compensator provided with actuator structures similar to the actuator structure shown in Fig. 2.
Fig. 11 is a configuration diagram of the actuator structure shown in Fig. 10.
Fig. 12 is a perspective view of the actuator structure shown in Fig. 1.

### DESCRIPTION OF THE PREFERRED EMBODIMENTS

The preferred embodiments of the actuator structure and optical device according to the present invention will be described below with reference to the drawings.

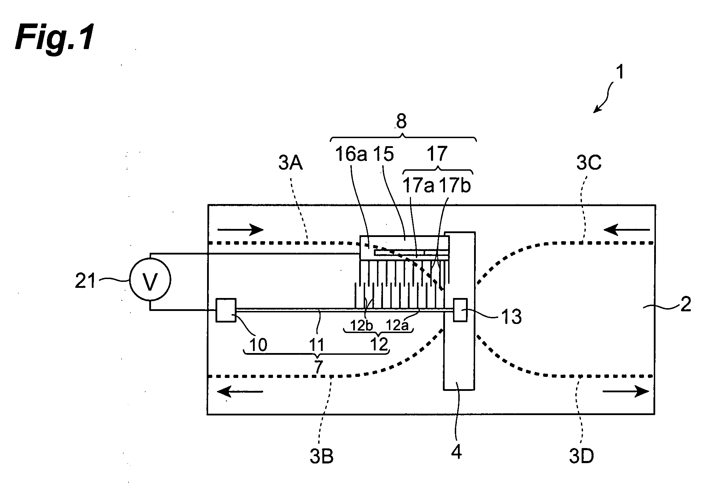

Fig. 1 is a configuration diagram showing an optical switch provided with the first embodiment of the actuator structure according to the present invention. The optical switch 1 shown in Fig. 1 is a 2x2 (2 inputs and 2 outputs) type switch. The optical switch 1 has a planar waveguide 2 made of silica glass or the like. This planar waveguide 2 is provided with optical waveguide cores 3A-3D which are formed in a nearly cross shape and on both sides of a trench 4.

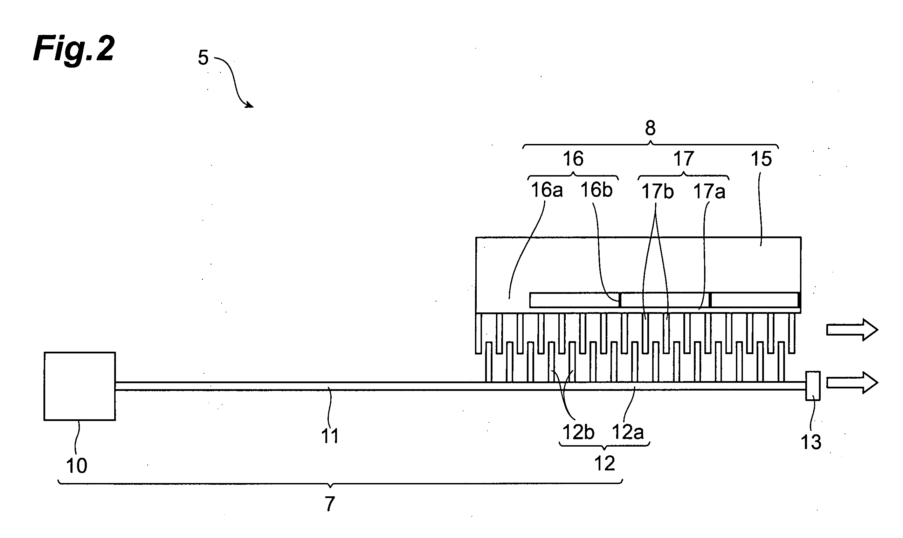

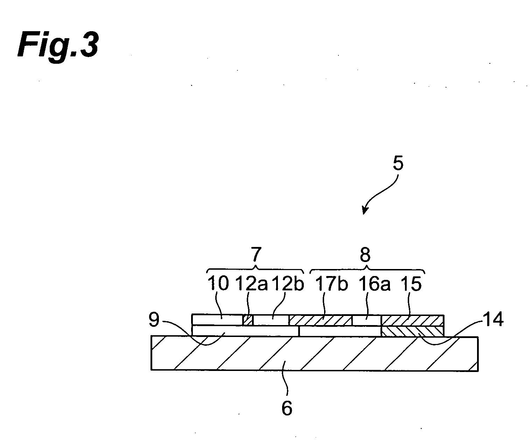

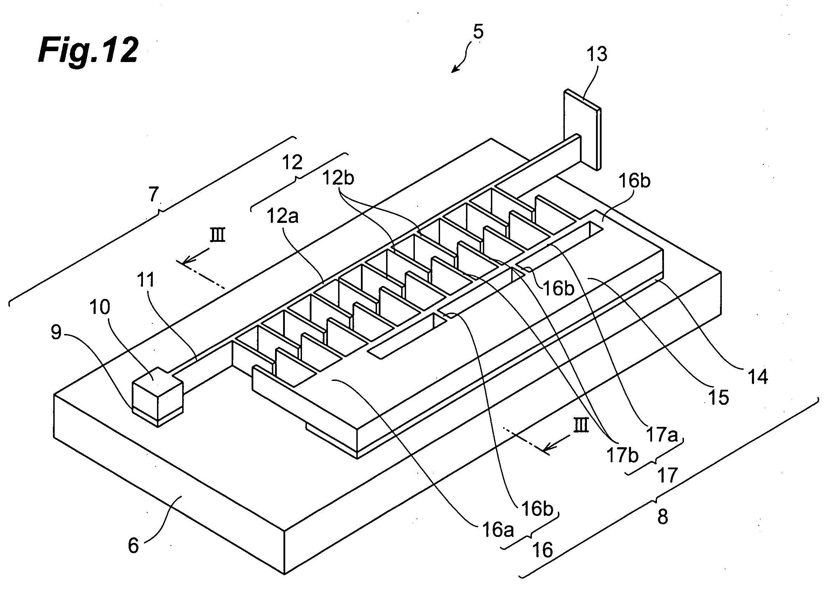

The actuator structure 5 fabricated by use of the Micro-Electro-Mechanical system (MEMS) technology is provided on this planar waveguide 2. Fig. 2 is an enlarged view of the actuator structure 5, Fig. 3 a vertical sectional view of the actuator structure 5, and Fig. 12 a perspective view of the actuator structure 5.

The actuator structure 5 shown in Figs. 2, 3, and 12 has an Si substrate 6. Electrodes 7, 8 made of Si with electrical conductivity are bonded to the upper surface of the Si substrate 6. The actuator structure 5 is configured to generate an electrostatic force between the electrodes 7, 8 and thereby to move the electrode 7 relative to the electrode 8.

The electrode 7 has a stationary portion 10 fixed to the upper surface of the Si substrate 6 through SiO₂ film 9, and a connection portion 11 of cantilever structure cantilevered on the stationary portion 10, and the connection portion 11 is floating relative to the Si substrate 6. A comb portion 12 is provided in the distal region of the connection portion 11.

The comb portion 12 has an arm 12a and a plurality of electrode fingers 12b. The arm 12a is continuous from the connection portion 11. The electrode fingers 12b are connected to a side face of the arm 12a, and extend in a direction intersecting with the longitudinal direction (predetermined direction) of the arm 12a.

A mirror 13 for reflecting light from the optical waveguide cores 3A, 3C toward the optical waveguide cores 3B, 3D is fixed to the tip of the connection portion 11, i.e., to the tip of the arm 12a.

The electrode 8 is placed on the Si substrate 6 so as to be opposed to the connection portion 11 of the electrode 7. The electrode 8 has a stationary portion 15 fixed through SiO₂ film 14 to the upper surface of the Si substrate 6, and a comb portion 17 coupled through main connection portion 16a to the stationary portion 15.

The comb portion 17 has an arm 17a and a plurality of electrode fingers 17b. The electrode fingers 17b are connected to a side face of the arm 17a and extend in a direction intersecting with the longitudinal direction (predetermined direction) of the arm 17a.

The comb portion 17 is opposed to the comb portion 12 of the electrode 7. The main connection portion 16a and the comb portion 17 are floating relative to the Si substrate 6. The electrode fingers 12b of the comb portion 12 are placed between the electrode fingers 17b of the comb portion 17. Namely, the arm 17a of the comb portion 17 is opposed to the arm 12a of the comb portion 12 and the electrode fingers 17b of the comb portion 17 are opposed to the electrode fingers 12b of the comb portion 12. This structure composed of the comb portion 12 and the comb portion 17 is the interdigital structure.

The main connection portion 16a is provided at one end of the stationary portion 15 (the end on the stationary portion 10 side of the electrode 7). The main connection portion 16a is made of an elastically deformable material.

The stationary portion 15 and the comb portion 17 are connected by a plurality of movable springs 16b made of the same material as the main connection portion 16a, as well as the main connection portion 16a. Namely, the connection portion 16 of the electrode 8 has the main connection portion 16a and the movable springs 16b. The connection portion 16 of this configuration is spaced from the substrate 6 and is of a beam structure which supports the arm 17a so as to be deformable in the longitudinal direction. In this structure, the comb portion 17 undergoes little flexure under the electrostatic force between the electrodes 7, 8 even if the base 17a, or the arm 17a of the comb portion 17 does not have a so high rigidity.

An operation of attaching the actuator structure 5 to the planar waveguide 2 is carried out as follows: the actuator structure 5 is turned upside down from the state shown in Fig. 3; the stationary portion 10 of the electrode 7 and the stationary portion 15 of the electrode 8 are bonded to the upper surface of the planar waveguide 2 so that the mirror 13 of the electrode 7 is set in the trench 4 of the planar waveguide 2 as shown in Fig. 1.

The electrodes 7 and 8 are connected through a voltage supply 21. When a predetermined voltage is applied between the electrodes 7, 8 by the voltage supply 21, an electrostatic force is generated between the electrodes to move the electrode 7. At this time, the comb portion 12 of the electrode 7 is movable around a support point of the connection portion 11. Since the electrodes 7, 8 both are comb electrodes, they can enhance the electrostatic force generated between the electrodes 7, 8 and it permits driving of the electrode 7 by a low voltage.

Since the electrode 7 has the connection portion 11 and arm 12a of the cantilever structure, the width of the actuator structure 5 (the size in the direction perpendicular to the longitudinal direction of the connection portion 11) can be decreased. This is advantageous in miniaturization and integration of the optical switch 1.

When the optical switch 1 of the configuration described above is in an initial state without application of the voltage by the voltage supply 21, the connection portion 11 and arm 12a of the electrode 7 extend straight, as shown in Fig. 1. In this state, light emerging from the optical waveguide core 3A is reflected by the mirror 13 to enter the optical waveguide core 3B, and light emerging from the optical waveguide core 3C is reflected by the mirror 13 to enter the optical waveguide core 3D.

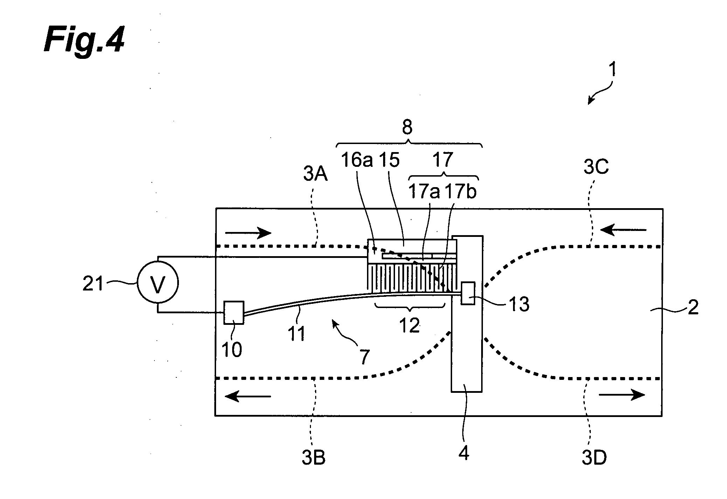

On the other hand, when the predetermined voltage is applied between the electrodes 7, 8 by the voltage supply 21, the connection portion 11 and the arm 12a of the electrode 7 bend toward the electrode 8 by the electrostatic force generated between the electrodes, as shown in Fig. 4, whereupon the mirror 13 moves toward the electrode 8. In this state, light emerging from the optical waveguide core 3A passes through the interior of the trench 4 to enter the optical waveguide core 3D, and light emerging from the optical waveguide core 3C passes through the interior of the trench 4 to enter the optical waveguide core 3B.

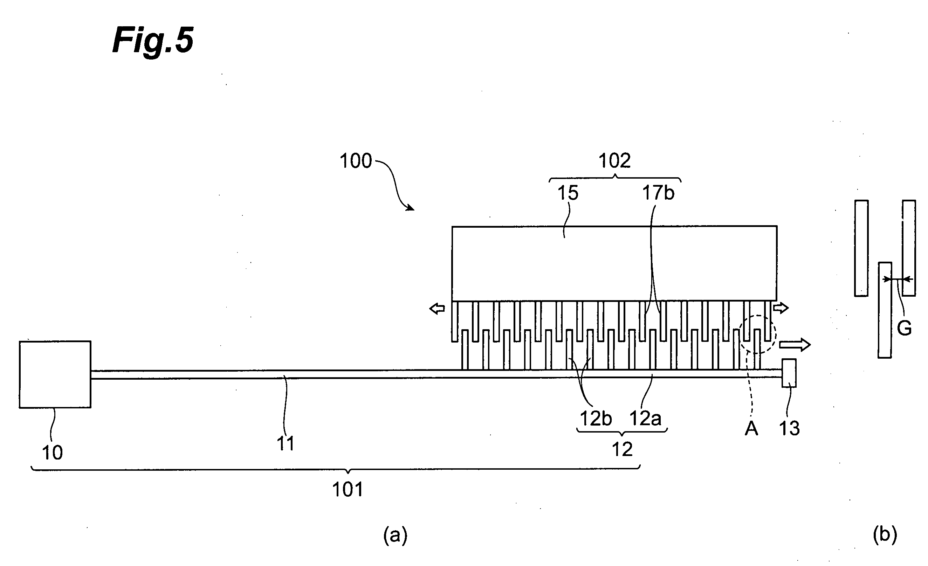

Another actuator structure as a comparative example is shown in Fig. 5. In Fig. 5 (a) shows a plan view of actuator structure 100 and (b) an enlarged plan view of the actuator structure 100 (which is an enlarged plan view of the part indicated by reference symbol A). The actuator structure 100 shown in Fig. 5 has electrodes 101, 102. The electrode 101 has the same structure as the aforementioned electrode 7. The electrode 102 has a structure in which a plurality of electrode fingers 17b are directly coupled to the stationary portion 15 in the aforementioned electrode 8, without the main connection portion 16a and the movable springs 16b in the aforementioned electrode 8.

In the actuator structure 100, the electrodes 101, 102 thermally expand with increase of temperature. In this configuration, the electrode fingers 17b of the electrode 102 are directly coupled to the stationary portion 15 fixed to the Si substrate (not shown), but the connection portion 11 and arm 12a of the electrode 101 are not fixed to the Si substrate; therefore, the amount of displacement of the electrode fingers 17b due to thermal expansion is smaller than the amount of thermal expansion of the connection portion 11 and arm 12a (cf. arrows in the drawing). For this reason, the moving distance of the electrode fingers 17b is different from that of the electrode fingers 12b with thermal expansion, so that the gap G varies between the electrode fingers 12b of the comb portion 12 and the electrode fingers 17b of the comb portion 17 to change the electric field established between the electrodes 101 and 102. In this case, there is a change in the equilibrium position between the spring force of the connection portion 11 and arm 12a and the electrostatic force, and thus the connection portion 11 and arm 12a are displaced even if the voltage applied by the voltage supply 21 is kept constant. As a result, the optical characteristics of the optical switch 1 can be changed with temperature change.

In contrast to it, the present embodiment adopts the configuration wherein the stationary portion 15 and the comb portion 17 of the electrode 8 are connected by the main connection portion 16a and movable springs 16b, whereby the amount of thermal expansion of the comb portion 17 becomes equivalent to that of the comb portion 12 of the electrode 7. In this connection, the main connection portion 16a is provided at one end of the stationary portion 15, whereupon the comb portion 17 undergoes thermal expansion in the arrow direction shown in Fig. 2, in the same manner as the comb portion 12. For this reason, the comb portion 17 of the electrode 8 moves as the comb portion 12 of the electrode 7 does. Therefore, the gap G between the electrode fingers 12b of the comb portion 12 and the electrode fingers 17b of the comb portion 17 is kept uniform, and thus the electric field balance established between the electrodes 7, 8 becomes almost constant, so as to rarely change the equilibrium position between the spring force of the connection portion 11 and the arm 12a and the electrostatic force. This achieves the compensation for the displacement of the comb portion 12 with temperature change and it is thus feasible to prevent the variations of the optical characteristics of the optical switch 1. In this case, the amount of displacement of the comb portion 17 under application of the electrostatic force between the electrodes 7, 8 from a state without application of the electrostatic force is preferably greater than that of the comb portion 12.

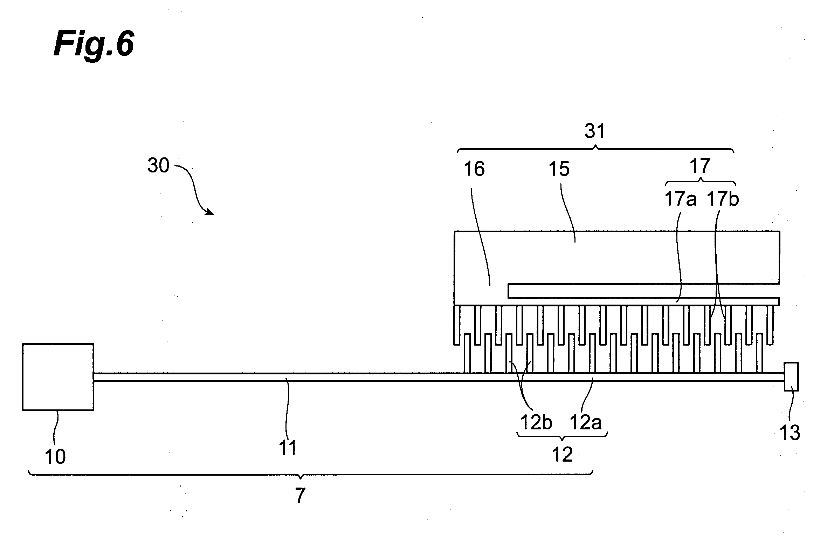

Fig. 6 is a configuration diagram showing an optical switch provided with the second embodiment of the actuator structure according to the present invention. In the drawing identical or equivalent members to those in the first embodiment are denoted by the same reference symbols, and the redundant description thereof will be omitted.

The actuator structure 30 shown in Fig. 6 has an electrode 31, instead of the aforementioned electrode 8. The base 17a or arm 17a of the comb portion 17 in this electrode 31 has so high a rigidity as not to be bent by the electrostatic force. In this case, there is no need for the aforementioned movable springs 16b, so that the configuration of the electrode can be simplified.

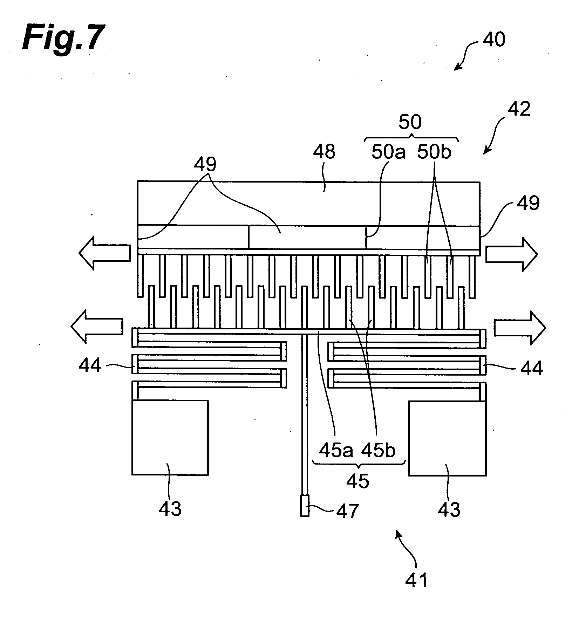

Fig. 7 is a configuration diagram showing the third embodiment of the actuator structure according to the present invention.

The actuator structure 40 shown in Fig. 7 has electrodes 41, 42. The electrode 41 has two stationary portions 43 fixed to the upper surface of the Si substrate (not shown), springlike connection portions 44 supported on these stationary portions 43, and a comb portion 45 supported on both sides thereof by the connection portions 44. This comb portion 45 has an arm 45a, and a plurality of electrode fingers 45b. The arm 45a is supported on both sides thereof through the connection portions 44 connected to the longitudinal ends thereof, on the stationary portions 43. The electrode fingers 45b are connected to a side face of the arm 45a and extend in a direction intersecting with the longitudinal direction of the arm 45a, i.e., in the direction toward the electrode 42. A mirror 47 is fixed through an interconnection 46 to a side face opposite to the aforementioned side face of the arm 45a. The connection portions 44 and the comb portion 45 are floating relative to the Si substrate.

The electrode 42 has a stationary portion 48 fixed to the upper surface of the Si substrate (not shown), and a comb portion 50 coupled through a plurality of movable springs (connection portions) 49 to the stationary portion 48. The comb portion 50 is opposed to the comb portion 45 of the electrode 41. Namely, this comb portion 50 has an arm 50a and a plurality of electrode fingers 50b. The electrode fingers 50b are connected to a side face of the arm 50a and extend in a direction intersecting with the longitudinal direction of the arm 50a, i.e., in the direction toward the electrode 41. The arm 45a is opposed to the arm 50a, and the electrode fingers 45b are opposed to the electrode fingers 50b. This structure composed of the comb portion 45 and the comb portion 50 is the interdigital structure. The movable springs 49 and the comb portion 50 are floating relative to the Si substrate.

The actuator structure 40 is constructed so that the electrode 41 is moved relative to the electrode 42 by the electrostatic force generated between the electrodes 41, 42. At this time, the comb portion 45 of the electrode 41 is movable in the direction substantially perpendicular to a straight line connecting the support points of the connection portions 44.

In the actuator structure 40 constructed as described above, with increase of temperature, the comb portion 50 of the electrode 42 readily comes to undergo thermal expansion in the same manner as the comb portion 45 of the electrode 41 (cf. arrows in the drawing). For this reason, as described above, the gap between the electrode fingers 45b of the comb portion 45 and the electrode fingers 50b of the comb portion 50 is maintained uniform even with temperature change, so that the displacement of the electrode 41 can be compensated for.

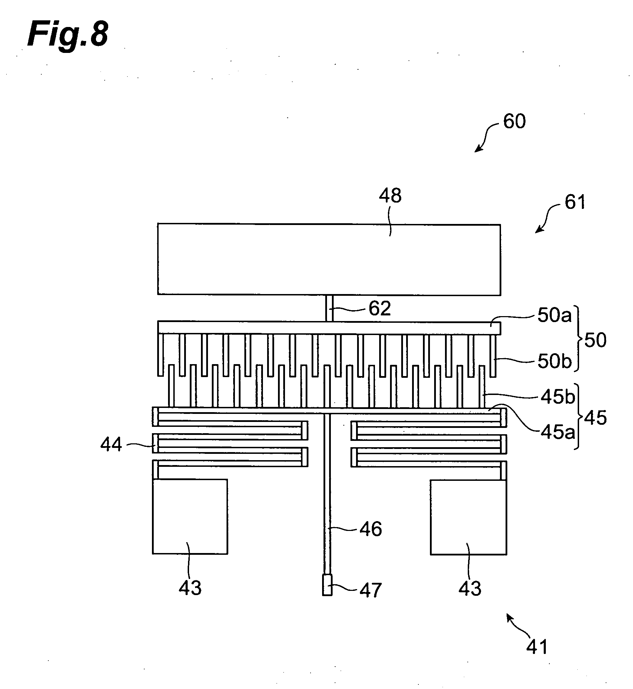

Fig. 8 is a configuration diagram showing the fourth embodiment of the actuator structure according to the present invention. In the drawing identical or equivalent members to those in the third embodiment are denoted by the same reference symbols, and the redundant description thereof will be omitted.

The actuator structure 60 shown in Fig. 8 has an electrode 61, instead of the aforementioned electrode 42. The stationary portion 48 and the comb portion 50 in this electrode 61 are coupled through one connection portion 62 of rod shape, plate shape, or the like. Namely, the connection portion 62 has a cantilever structure in which it is cantilevered on the stationary portion 48, and the comb portion 50 is coupled to the tip of the connection portion 62. The connection portion 62 has so high a rigidity as not to bend the comb portion 50 under the electrostatic force. In this case, a compensation can also be made for the displacement of the electrode 41 with temperature change.

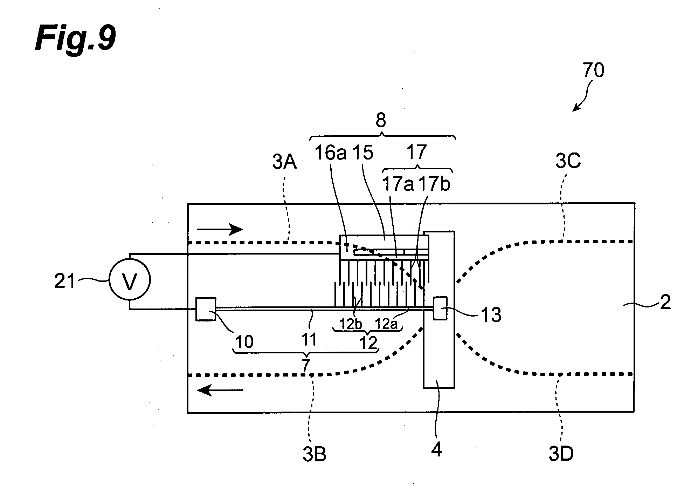

Fig. 9 is a configuration diagram showing an optical variable attenuator with the aforementioned actuator structure 5.

The optical variable attenuator 70 shown in Fig. 9 has the same structure as the optical switch 1 shown in Fig. 1. The optical variable attenuator 70 is arranged to change the voltage applied between the electrodes 7, 8, on an analog basis to vary the quantity of reflected light on the mirror 13, thereby adjusting the level of optical attenuation.

Specifically, in an initial state in which the voltage applied by the voltage supply 21 is zero, the light emerging from the optical waveguide core 3A is totally reflected by the mirror 13 to enter the optical waveguide core 3B. This makes the level of optical attenuation minimum. When a voltage is applied between the electrodes 7, 8 by the voltage supply 21, an electrostatic force generated between the electrodes 7, 8 moves the mirror 13 toward the electrode 8, and thus part of the light emerging from the optical waveguide core 3A is not reflected by the mirror 13 and enters the optical waveguide core 3D. This results in decreasing the quantity of light entering the optical waveguide core 3B after reflected by the mirror 13, and, in turn, increasing the level of optical attenuation.

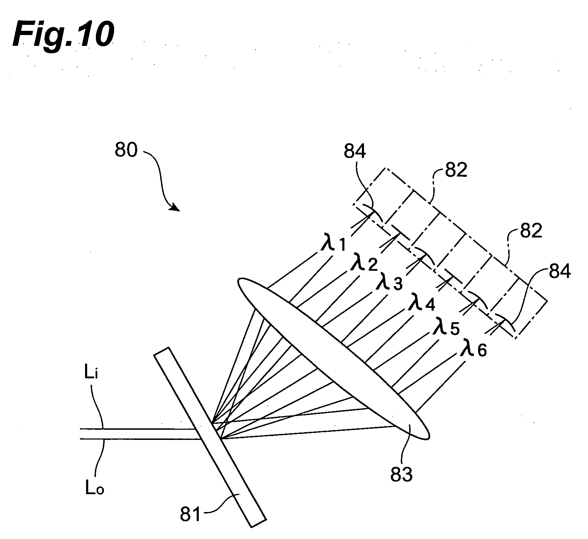

Fig. 10 is a configuration diagram showing a dispersion compensator provided with actuator structures similar to the aforementioned actuator structure 5.

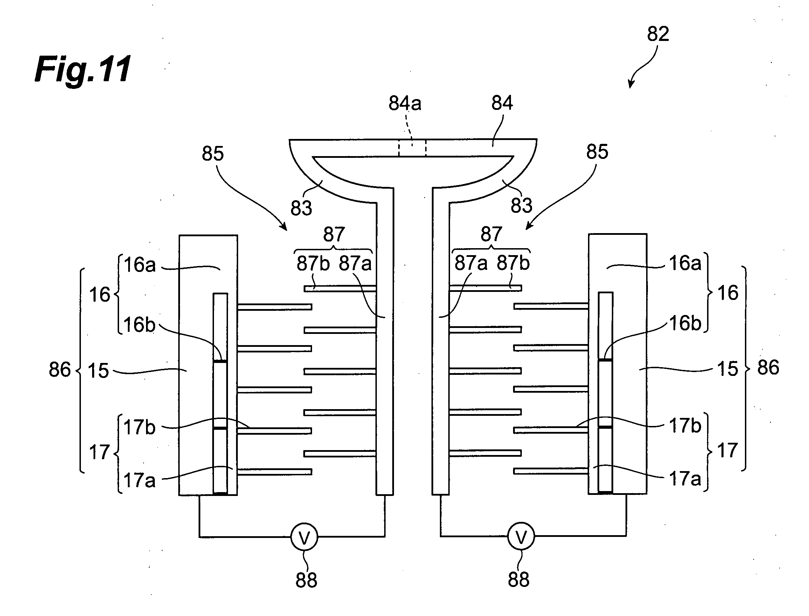

The dispersion compensator 80 shown in Fig. 10 is configured to give input signal light phase shifts to implement dispersion compensation of the signal light. The dispersion compensator 80 has a diffraction grating 81 for separating the signal light Li into wavelength components, a plurality of actuator structures 82, and a lens 83 placed between the diffraction grating 81 and the plurality of actuator structures 82. The configuration of each actuator structure 82 is shown in Fig. 11.

Each actuator structure 82 has a mirror 84 for reflecting signal light Li of a wavelength band separated, two nearly L-shaped electrodes 85 coupled to two ends of this mirror 84, and two electrodes 86 placed so as to be opposed to the respective electrodes 85.

The center part of the mirror 84 is fixed to an Si substrate (not shown). This permits the mirror 84 to be freely deformed in curved shape around an axis on the center part. The center part of the mirror 84 is a stationary portion 84a of the electrode 85. Each electrode 85 is provided with electrode fingers 87b extending toward the corresponding electrode 86.

Namely, each electrode 85 has a connection portion 89, and a comb portion 87 supported on this connection portion 89. The connection portion 89 and the comb portion 87 are spaced from the substrate. The connection portion 89 is connected to a side portion of the mirror 84, whereby it is supported on the stationary portion 84a. The comb portion 87 has an arm 87a and a plurality of electrode fingers 87b. The arm 87a is continuous from the connection portion 89 and extends in a direction intersecting with the mirror 84. The electrode fingers 87b are connected to a side face of the arm 87a and extend in a direction intersecting with the longitudinal direction of the arm 87a. Namely, the electrode fingers 87b extend toward the corresponding electrode 86.

The electrodes 86 have much the same structure as the electrode 8 of the aforementioned actuator structure 5.

The electrodes 85 and 86 are connected through a voltage supply 88. When a voltage is applied between the electrodes 85, 86 by the voltage supplies 88, the electrodes 85 are attracted toward the electrodes 86 by electrostatic forces generated between them, whereupon the mirror 84 bends into concave shape. At this time, the amount of flexure of the mirror 84 varies with change of the voltage applied by the voltage supplies 88.

In the dispersion compensator 80 of the structure as described above, the incident signal light Li is separated into wavelength bands by the diffraction grating 81. Then the signal light beams thus separated propagate through the lens 83 to the respective actuator structures 82 to be reflected by the corresponding mirrors 84. At this time, the flexure amounts of the respective mirrors 84 are controlled so as to compensate for dispersion by giving desired phase differences to the signal light beams of the wavelength bands separated. The signal light beams reflected by the respective mirrors 84 propagate again through the lens 83 to the diffraction grating 81, and they are multiplexed by this diffraction grating 81 to be outputted as signal light Lo.

The present invention is not limited to the above embodiments. For example, the connection portion connecting the stationary portion of the electrode 8, 31, 42, or 61 to the comb portion does not have to be limited to the above structures, but may be any structure capable of thermally expanding or thermally contracting the comb portion in the same manner as the electrode 7 or 41, without flexure of the comb portion by the electrostatic force.

The above embodiments showed the configurations wherein the actuator structure was incorporated in the 2×2 (two inputs and two outputs) type optical switch, the optical variable attenuator, and the dispersion compensator, but it is needless to mention that the actuator structure of the present invention is also applicable to optical switches such as ON/OFF switches or 1×2 switches, and to the other optical devices.

As described above with the preferred embodiments of the present invention, the present invention provides the configuration in which the first comb portion of the first electrode is connected through the first connection portion to the first stationary portion fixed to the substrate, and thereby successfully compensates for the displacement of the second electrode with temperature change. This makes it feasible to reduce the variations of the optical characteristics of the optical device.

## Claims

1. An actuator structure comprising:
a first electrode having a first stationary portion fixed to a substrate, a first connection portion supported on the first stationary portion, and a first comb portion connected through the first connection portion to the first stationary portion;
a second electrode having a second stationary portion fixed to the substrate, a second connection portion supported on the second stationary portion, and a second comb portion connected through the second connection portion to the second stationary portion and opposed to the first comb portion; and
means for generating an electrostatic force between the first electrode and the second electrode,
wherein the first comb portion, the second comb portion, the first connection portion, and the second connection portion are spaced from the substrate.

2. The actuator structure according to Claim 1, wherein a rigidity of the first comb portion is greater than a rigidity of the second comb portion.

3. The actuator structure according to Claim 1 or 2, wherein the first connection portion is made of an elastically deformable material.

4. The actuator structure according to Claim 3, wherein the first connection portion has a spring structure.

5. The actuator structure according to Claim 3, wherein the first connection portion has a beam structure for supporting the first comb portion so as to be deformable in a longitudinal direction of the first comb portion.

6. The actuator structure according to Claim 1, wherein the second comb portion is cantilevered through the second connection portion on the second stationary portion.

7. The actuator structure according to Claim 1, wherein the second comb portion is supported on both sides thereof through the second connection portion on the second stationary portion.

8. The actuator structure according to any one of Claims 1 to 7, wherein an amount of displacement of the second comb portion under application of the electrostatic force between the first electrode and the second electrode from a state without application of the electrostatic force is arranged to be greater than an amount of displacement of the first comb portion.

9. An optical device comprising:
the actuator structure as defined in any one of Claims 1 to 8; and
an optical component connected to the second electrode of the actuator structure.
